# EUROPÄISCHE PATENTANMELDUNG

(11) **EP 1 508 954 A1**
(43) Veröffentlichungstag der Anmeldung: **23.02.2005**
(21) Anmeldenummer: 04012971.0
(22) Anmeldetag: 02.06.2004
(51) Int. Cl.: H02K 15/095, H02K 15/12

(54) **Verfahren zur Herstellung eines Bauteils mit einer Spule sowie elektrische Maschine mit derartigem Bauteil**

(30) Priorität: 21.08.2003 DE 10338452
(71) Anmelder: ROBERT BOSCH GMBH, 70442 Stuttgart (DE)
(72) Erfinder: Sponar, Heiko, 76437 Rastatt (DE); Gaida, Cornelius, 71404 Korb (DE); Herp, Juergen, 77815 Buehl (DE); Zierer, Gerald, 76437 Rastatt-Wintersdorf (DE)

(57) **Zusammenfassung**

Die vorliegende Erfindung betrifft Verfahren zum Herstellen eines Bauteils (1) mit einer Spule (9) für eine elektrische Maschine, umfassend die Schritte des Wickelns eines oder mehrerer Drähte (10) zu einer Spule (9), wobei der Draht ein Backlackdraht mit einem elektrisch leitenden Kern, einer Isolierschicht und einer äußeren Backschicht ist, des Pressens der gewickelten Spule mit einem Presswerkzeug (8), und des Verbackens der gepressten Spule (9), um die geometrische Gestalt der Spule beizubehalten.

## Beschreibung

### Stand der Technik

Die vorliegende Erfindung betrifft ein Verfahren zum Herstellen eines Bauteils mit einer Wicklung für eine elektrische Maschine sowie eine elektrische Maschine, umfassend ein derart hergestelltes Bauteil.

Elektrische Maschinen sind als Motoren oder Generatoren in vielfältigen Ausgestaltungen bekannt. Beispielsweise werden in jüngster Zeit verstärkt auch bürstenlose EC-Motoren eingesetzt, welche als eine Baugruppe den Stator aufweisen. Der Stator hat dabei die Aufgabe, den elektrischen Fluss zu führen. Hierbei weist der Stator mehrere Statorzähne auf, auf denen mehrere Drähte zur Bereitstellung der Spulen aufgewickelt sind. Hierbei gibt es verschiedene Wickelverfahren, um die Spulen auf den Stator aufzuwickeln. Als Wickelverfahren werden beispielsweise so genanntes Flyerwickeln oder Nadelwickeln verwendet. Hierbei ergibt sich jedoch der Nachteil, dass insbesondere an den Randzonen zum Statorgrundkörper bzw. zu den Statorzähnen Freiräume verbleiben, welche nicht mit Draht ausgefüllt sind. Dadurch ergibt sich ein schlechter Drahtfüllfaktor der Spulen.

### Vorteile der Erfindung

Das erfindungsgemäße Verfahren zum Herstellen eines Bauteils mit einer Spule gemäß den Merkmalen des Patentanspruchs 1 weist demgegenüber den Vorteil auf, dass ein Freiraum zwischen der Spule und dem Stator minimiert ist. Dies wird erfindungsgemäß dadurch erreicht, dass nach dem Wickelvorgang die Spule mittels eines Presswerkzeugs vorzugsweise gegen den Stator gepresst wird. Hierdurch können die nach dem Wickeln verbliebenen Freiräume zwischen Stator und Spule minimiert werden. Hierdurch kann die Spule optimal an die geometrische Form des Stators bzw. des Polzahns angepasst werden. Um zu verhindern, dass die gepresste Spule die durch das Pressen erhaltene Geometrie wieder verlässt, wird erfindungsgemäß als Draht für die Spule ein Backlackdraht verwendet. Ein Backlackdraht ist ein Draht, bei dem der elektrisch leitende Draht zusätzlich zu einer Isolierschicht, z.B. einer Lackschicht, eine weitere äußere Schicht (Backschicht) aufweist, welche insbesondere eine thermoplastische Schicht ist. Diese weitere äußere Schicht wird bei Erwärmen aufgeweicht und kann sich mit einer äußeren Schicht eines benachbarten Drahtes verbinden. Dieser Vorgang wird auch Verbacken genannt. Dadurch kann sichergestellt werden, dass die geometrische Gestalt der gepressten Spule beibehalten wird. Somit kann erfindungsgemäß im Vergleich mit dem Stand der Technik ein höherer Drahtfüllfaktor an den Polzähnen erreicht werden. Aufgrund dieses erhöhten Drahtfüllfaktors kann weiterhin das die Spule aufweisende Bauteil verkürzt werden, so dass sich eine elektrische Maschine kompakter ausgestalten lässt. Weiterhin können dadurch auch die Materialkosten, z.B. aufgrund einer geringeren Anzahl von Statorlamellen, weniger Magnetmaterial, einer verkürzten Welle usw., verringern. Darüber hinaus hat eine derart hergestellte elektrische Maschine noch ein geringeres Rastmoment sowie einen gesunkenen thermischen Übergangswiderstand. Somit kann erfindungsgemäß eine kompaktere elektrische Maschine bereitgestellt werden oder bei gleicher Baulänge eine elektrische Maschine mit vergrößerter Leistung und vergrößertem Wirkungsgrad. Hierbei kann bei einem höheren Wirkungsgrad auch eine sinkende Strombelastung erreicht werden, was insbesondere bei Verwendung der elektrischen Maschine in Fahrzeugen hinsichtlich der Elektronik und des Bordnetzes Vorteile bringt.

Vorzugsweise wird der Pressschnitt derart ausgeführt, dass eine Packungsdichte der Windungen der Spule erhöht wird und/oder eine gewünschte Außengeometrie erreicht wird.

Um während des Herstellvorgangs sicher die geometrische Form der gepressten Wicklungen beizubehalten, wird das Presswerkzeug vorzugsweise erst nach dem Verbackvorgang entfernt.

Weiterhin bevorzugt ist die Presskraft des Presswerkzeugs derart gewählt, dass sich der Draht plastisch verformt, ohne dass dabei jedoch die isolierende Schicht des Drahtes beschädigt wird. Durch diese plastische Verformung kann eine optimale Anpassung der Drähte an die geometrische Ausgestaltung des Bauteils der elektrischen Maschine erreicht werden.

Ein besonders kostengünstiges und schnelles Herstellverfahren wird vorzugsweise dadurch erreicht, dass mehrere Spulen gleichzeitig verpresst werden. Besonders bevorzugt ist ein Presswerkzeug dabei derart ausgebildet, dass alle am Bauteil der elektrischen Maschine vorhandenen Wicklungen gleichzeitig verpresst werden können. Eine besonders einfache Durchführung kann erreicht werden, wenn das Presswerkzeug vorzugsweise derart ausgebildet ist, dass benachbarte Spulen gleichzeitig gepresst werden.

Besonders bevorzugt ist die elektrische Maschine ein EC-Motor oder ein EC-Generator, wobei insbesondere der Stator die erfindungsgemäß ausgebildeten Spulen aufweist oder die erfindungsgemäß ausgebildeten Spulen werden bei Rotoren bei DC-Antrieben verwendet.

Vorzugsweise sind die Wicklungen als Luftspulen gebildet.

Das Verbacken des Backlackdrahtes kann mit unterschiedlichem Verfahren ausgeführt werden. Beispielsweise kann der Draht durch induktives Aufheizen erwärmt werden, oder es wird ein erwärmtes oder beheizbares Presswerkzeug verwendet, oder eine Erwärmung erfolgt von außerhalb, beispielsweise mittels eines Ofens o.Ä..

Eine erfindungsgemäße elektrische Maschine, welche eine gemäß obigem Verfahren hergestellte Säule aufweist, hat den Vorteil, dass entweder die elektrische Maschine durch die Erhöhung des Drahtfüllfaktors im Bereich zwischen den Polzähnen entweder kompakter (kürzer) ausgebildet werden kann, oder bei gleicher Baulänge eine erhöhte Leistung und einen verbesserten Wirkungsgrad aufweist. Bei Verwendung derartiger elektrischer Maschinen, beispielsweise als EC-Motoren in Fahrzeugen, lassen sich dadurch einerseits Gewicht und Abmessungen des Motors verringern und andererseits können durch eine Massenfertigung große herstellungsbedingte Vorteile erreicht werden. Weiterhin hat die Verwendung in Fahrzeugen aufgrund des höheren Wirkungsgrades auch positive Auswirkungen für die Elektronik bzw. das Bordnetz des Fahrzeugs. Ein besonders hoher Drahtfüllfaktor kann dabei durch plastische Verformung der Drähte erreicht werden, da dann die meisten vorhandenen Freiräume zwischen der Spule und dem die Spule aufnehmenden Bauteil, insbesondere dem Stator, verringert werden können.

### Zeichnung

Nachfolgend wird ein bevorzugtes Ausführungsbeispiel der Erfindung unter Bezugnahme auf die begleitende Zeichnung beschrieben. In der Zeichnung ist:
- Figur 1: eine schematische Draufsicht eines Stators ohne Spulen für eine elektrische Maschine gemäß einem Ausführungsbeispiel der vorliegenden Erfindung,
- Figur 2: eine schematische Schnittansicht des in Figur 1 gezeigten Stators mit einer Spule,
- Figur 3: eine zur Figur 2 ähnliche Ansicht mit einem Presswerkzeug,
- Figur 4: eine zu Figur 3 ähnliche Ansicht während des Pressvorgangs und
- Figur 5: eine zu Figur 2 ähnliche Ansicht, wobei die Spule im gepressten Zustand dargestellt ist.

### Beschreibung des Ausführungsbeispiels

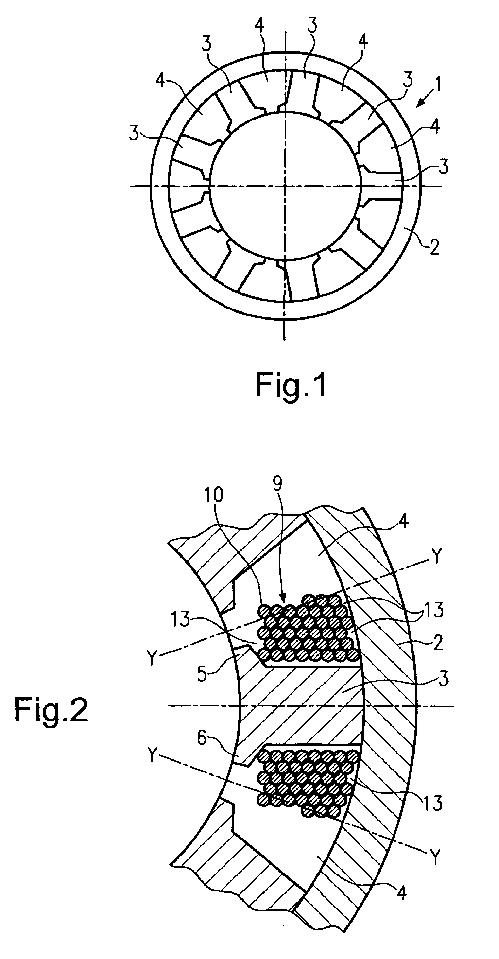

Nachfolgend wird unter Bezugnahme auf die Figuren 1 bis 5 ein erfindungsgemäßes Verfahren zur Herstellung einer elektrischen Maschine mit verbesserter Spulenwicklung dargestellt.

Figur 1 zeigt einen Stator 1 einer elektrischen Maschine, wobei der Stator 1 ein umlaufendes Ringelement 2 und eine Vielzahl von Statorzähnen 3 aufweist. Wie im Detail in Figur 2 gezeigt, sind die Statorzähne im Schnitt T-förmig ausgebildet und weisen an ihrem nach innen gerichteten Ende 2 in Umfangsrichtung verlaufende Ansätze 5 und 6, auch Zahnfuß genannt, auf.

Figur 2 zeigt eine schematische Schnittansicht des Stators, wobei um einen Statorzahn 3 eine Spule 9, bestehend aus einer Vielzahl von Wicklungen 10 aus mindestens einem Draht dargestellt ist. Zur besseren Übersichtlichkeit ist in den Figuren 2 bis 5 nur jeweils eine Spule genauer dargestellt und bezeichnet. Die Spule 9 ist mit einem bekannten Verfahren, z.B. auf den Statorzahn 3, gewickelt worden. Wie deutlich aus Figur 2 ersichtlich ist, ergeben sich aufgrund der geometrischen Gegebenheiten und den Wickelverfahren freie Bereiche 13 zwischen den Drähten 10 und dem Stator 1. Diese freien Bereiche 13 sind mit Luft aufgefüllt und beeinflussen den Wirkungsgrad der elektrischen Maschine nachteilig.

Der Draht 10 ist ein so genannter Backlackdraht, welcher innen einen Kupferdraht aufweist, der mit einer Lackschicht zur Isolation überdeckt ist und an dem eine zusätzliche thermoplastische Backlackschicht aufgebracht ist.

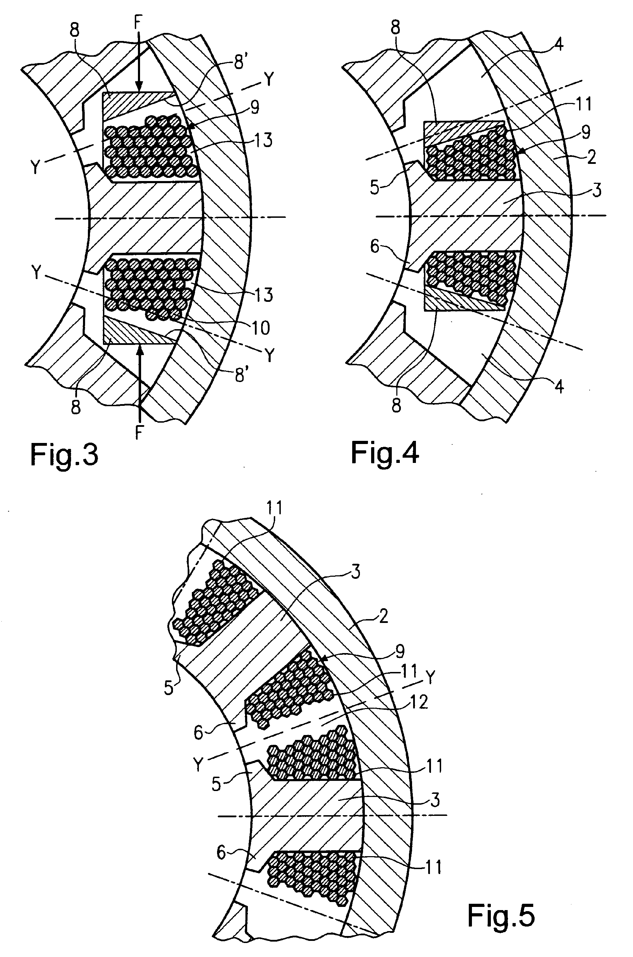

Figur 3 zeigt nun den nach dem Wickeln nächsten erfindungsgemäßen Schritt des Herstellverfahrens gemäß der Erfindung. In Figur 3 ist schematisch ein Presswerkzeug 8 dargestellt. Das Presswerkzeug 8 umfasst zwei Pressbacken, welche eine Spule 9 von beiden Seiten im Wesentlichen in Umfangsrichtung pressen. Hierbei wird eine vorbestimmte Kraft F aufgebracht und wirkt über die Presswerkzeuge 8 direkt auf die Drähte 10 der Spule 9. Figur 4 zeigt hierbei den Zustand während des Verpressens. Hierbei sind die Drähte der Spule 9 plastisch verformt, was in Figur 4 im Unterschied zur Figur 3 durch die wabenförmige Struktur der verformten Drähte 11 dargestellt ist. Durch dieses plastische Verformen der Drähte der Spule wird der Freiraum 13, welcher aus wickeltechnischen Gründen nicht bewickelt werden kann, ebenfalls mit Kupferdraht gefüllt. Die Backlackdrähte werden dabei derart plastisch verformt, dass dabei nicht ihre Lackisolierschicht beschädigt wird. Somit kann im Vergleich mit dem Stand der Technik ein hoher Kupferfüllfaktor der Spulen erreicht werden.

Gleichzeitig zum oder nach dem Pressschritt wird die Spule 9 erwärmt, um durch das Verbacken des Backlackdrahtes die aufgrund der Pressung erhaltenen geometrische Gestalt der Spule 9 unverändert beizubehalten. Das Verbacken des Backlackdrahtes kann auf unterschiedliche Weise ausgeführt werden, wobei beispielsweise der gesamte Stator in einem Ofen erwärmt werden kann, oder es wird eine induktive Erwärmung der Spule durchgeführt oder nach dem Pressschritt werden die Presswerkzeuge erwärmt, so dass über diese auch eine Erwärmung der Spule 9 erfolgt. Der Vorteil des letztgenannten Erwärmungsverfahrens liegt darin, dass aufgrund des ständigen Anliegens der Presswerkzeuge mit Sicherheit die Gestalt der verpressten Spule 9 beibehalten werden kann.

Hinsichtlich des Presswerkzeugs 8 sei angemerkt, dass dieses eine derartige Form aufweist, um einen möglichst hohen Kupferfüllfaktor jeder Spule 9 zu erreichen. Hierbei ist insbesondere die Pressfläche 8' des Presswerkzeugs derart ausgebildet, dass sie parallel zu einer durch den gedachten Mittelpunkt des Stators verlaufenden Linie y-y ist.

Somit kann durch das Erwärmen des Backlackdrahtes ein Verkleben der einzelnen Windungen miteinander erreicht werden, und nach dem Erkalten erstarren die Windungen somit in der Form, in welche sie durch das Presswerkzeug 8 gepresst wurden. Hierbei wird aufgrund des Einführens des Presswerkzeugs 8 in den Zwischenraum zwischen zwei Statorzellen 3 ein Spalt 12 zwischen zwei Spulen 9 beibehalten. In Figur 5 ist dieser Spalt 12 zur besseren Darstellbarkeit übertrieben dargestellt. In Wirklichkeit werden die Presswerkzeuge 8 möglichst flach gewählt, so dass der Spalt 12 zwischen zwei Spulen möglichst gering ist und ein hoher Kupferfüllfaktor erreicht werden kann.

Um zu verhindern, dass die Presswerkzeuge während des Verbackvorgangs mit dem Thermoplast des Backlackdrahtes verkleben, weisen diese eine dies verhinderde Beschichtung auf.

Es sei angemerkt, dass das erfindungsgemäße Verfahren auch hervorragend bei Luftspulen bzw. Spulen, die auf einen Spulenkörper gewickelt sind, z.B. ein Kunststoffträger der bewickelt wird und dann verpreßt wird, eingesetzt werden kann, wobei dann beispielsweise ein zylindrischer Innenstempel und ein entsprechend der geometrisch gewollten Form gebildeter Außenstempel des Presswerkzeugs vorgesehen ist, um den Pressvorgang des um den Innenstempel gewickelten Drahtes auszuführen. Nach dem Verbacken kann dann der Innenstempel und der Außenstempel entfernt werden, so dass eine in seine Form verbackene Luftspule erhalten wird.

## Patentansprüche

1. Verfahren zum Herstellen eines Bauteils (1) mit einer Spule (9) für eine elektrische Maschine, umfassend die Schritte:
- Wickeln eines oder mehrerer Drähte (10) zu einer Spule (9), wobei der Draht ein Backlackdraht mit einem elektrisch leitenden Kern, einer Isolierschicht und einer äußeren Backschicht ist,
- Pressen der gewickelten Spule mit einem Presswerkzeug (8), und
- Verbacken der gepressten Spule (9), um die geometrische Gestalt der Spule beizubehalten.

2. Verfahren nach Anspruch 1, **dadurch gekennzeichnet, dass** der Schritt des Pressens derart ausgeführt wird, dass eine Packungsdichte der Windungen der Spule (9) erhöht wird und/oder eine gewünschte Außengeometrie erreicht wird.

3. Verfahren nach Anspruch 1 oder 2, **dadurch gekennzeichnet, dass** das Presswerkzeug (8) erst nach dem Verbackvorgang entfernt wird.

4. Verfahren nach einem der vorhergehenden Ansprüche, **dadurch gekennzeichnet, dass** eine Presskraft (F) des Presswerkzeugs (8) derart gewählt ist, dass sich der Draht der Spule (9) plastisch verformt.

5. Verfahren nach einem der vorhergehenden Ansprüche, **dadurch gekennzeichnet, dass** mehrere gewickelte Spulen (9) eines Bauteils (1) gleichzeitig verpresst werden und/oder dass beim Pressvorgang das Presswerkzeug derart ausgebildet ist, dass zueinander benachbarte Spulen gleichzeitig gepresst werden.

6. Verfahren nach einem der vorhergehenden Ansprüche, **dadurch gekennzeichnet, dass** die Spulen (9) um einen Polzahn (3) eines Bauteils gewickelt sind, oder dass die Spulen als Luftspulen um einen Innenstempel eines Presswerkzeugs gewickelt sind.

7. Verfahren nach einem der vorhergehenden Ansprüche, **dadurch gekennzeichnet, dass** das Bauteil (1) ein Stator oder Rotor ist.

8. Elektrische Maschine, umfassend ein Bauteil mit einer Spule (9), wobei die Spule aus Backlackdraht gebildet ist, wobei die die Spule (9) bildenden Wicklungen der Backlackdrähte nach dem Wickelvorgang derart verpresst sind, dass die Spule (9) einen hohen Drahtfüllfaktor aufweist, wobei die verpressten Wicklungen durch Verbacken des Backmaterials der Backlackdrähte in ihrer durch das Verpressen eingenommenen Form miteinander verbacken sind.

9. Elektrische Maschine nach Anspruch 8, **gekennzeichnet durch** plastisch verformte Wicklungen (11), welche infolge des Verpressvorgangs plastisch verformt sind.

10. Elektrische Maschine nach Anspruch 8 oder 9, **dadurch gekennzeichnet, dass** das die Spule (9) aufweisende Bauteil (1) ein Stator oder Rotor ist.
